# NEUE EUROPÄISCHE PATENTSCHRIFT

(11) **EP 1 732 787 B2**
(45) Veröffentlichungstag und Bekanntmachung des Hinweises auf die Entscheidung über den Einspruch: **25.03.2015**
(45) Hinweis auf die Patenterteilung: 22.02.2012
(21) Anmeldenummer: 05764693.7
(22) Anmeldetag: 14.03.2005
(51) Int. Cl.: B60R 21/21, B60R 21/216

(54) **TÜRINNENVERKLEIDUNG MIT EINEM AIRBAG ZUM KOPF- UND/ODER SCHUL TERAUFPRALLSCHUTZ BEI EINER SEITENKOLLISION UND/ODER EINEM ÜBERSCHLAG UND KRAFTFAHRZEUGTÜR MIT EINER SOLCHEN TÜRINNENVERKLEIDUNG**
INTERNAL DOOR CLADDING PROVIDED WITH A HEAD AND/OR SHOULDER ANTI-SHOCK AIRBAG IN THE EVENT OF SIDE COLLISION AND/OR ROLLOVER AND A VEHICLE PROVIDED WITH SAID INTERNAL DOOR CLADDING
HABILLAGE INTERIEUR DE PORTIERE COMPRENANT UN AIRBAG ANTI-CHOC TETE ET/OU EPAULES EN CAS DE COLLISION LATERALE ET/OU UN RECOUVREMENT, ET PORTIERE DE VEHICULE PRESENTANT UN TEL HABILLAGE INTERIEUR

(30) Priorität: 26.03.2004 DE 102004013036
(43) Veröffentlichungstag der Anmeldung: 20.12.2006
(73) Patentinhaber: Faurecia Innenraum Systeme GmbH, 76767 Hagenbach (DE)
(72) Erfinder: LINDEMANN, Sabine, 34317 Habichtswald (DE); ZIMMERMAN, Eric, 34125 Kassel (DE); WANDTKE, Sebastian, 37073 Göttingen (DE)
(74) Vertreter: Richardt Patentanwälte PartG mbB
(86) Internationale Anmeldenummer: PCT/EP2005/002688
(87) Internationale Veröffentlichungsnummer: WO 2005/090132

(56) Entgegenhaltungen:
- EP-A2- 1 083 100
- DE-A1- 4 304 152
- DE-A1- 4 330 692
- DE-A1- 10 104 036
- DE-A1- 10 141 943
- DE-A1- 10 164 210
- DE-A1- 19 505 214
- DE-A1- 19 725 176
- DE-A1- 19 811 181
- DE-C1- 10 061 093
- FR-A1- 2 792 271
- GB-A- 2 298 169
- US-A1- 2001 042 975
- US-A1- 2003 141 709

## Beschreibung

Die Erfindung betrifft eine Türinnenverkleidung mit einem Airbag zum Kopf- und/oder Schulteraufprallschutz bei einer Seitenkollision und/oder einem Überschlag und eine Kraftfahrzeugtür mit Kopf- und/oder Schulteraufprallschutz bei einer Seitenkollision und/oder einem Überschlag.

Aus dem Stand der Technik sind Airbagvorrichtungen als Seitenaufprallschutz, insbesondere als Kopfseiten-Aufprallschutz bekannt. Solche Seitenairbags werden auch als "Windowsbag" oder "Curtain" bezeichnet. Üblicherweise sind Curtain-Airbags an der Fahrzeugdecke befestigt und entfalten sich bei der Auslösung von oben nach unten wie ein "Vorhang". Nachteilig bei diesen vorbekannten Seitenairbags ist, dass diese nicht für Cabriolets verwendbar sind.

Aus der DE 19632616A1, von der die vorliegende Erfindung als nächstkommenden Stand der Technik ausgeht, ist ein Seitenaufprallschutz für Fahrzeuginsassen bekannt, welcher durch eine Türkonstruktion realisiert ist. In der Türkonstruktion ist eine Kammer gebildet, in der eine einen Airbag enthaltende Kassette angeordnet ist. Zum Fahrgastraum hin ist die Kammer durch einen Deckel verschlossen, der sich bei Aktivierung des Airbags aus seiner Verankerung löst. Bei Aktivierung des Airbags dehnt dieser sich schräg nach oben in Richtung auf den Kopf und Schulter des Fahrers bzw. des Fahrgastes aus und stützt sich dabei gegen die Fensterscheibe ab.

Nachteilig bei dieser vorbekannten Türkonstruktion ist insbesondere, dass der Deckel bei Auslösung des Airbags unkontrolliert in den Fahrgastraum geschleudert wird, was ein erhebliches Verletzungsrisiko darstellt. Dieser Nachteil wird noch dadurch erschwert, dass der Deckel beidseitig mit der Kammer verankert ist, sodass ein entsprechend großer Druckaufbau des Airbags für die Lösung des Deckels aus seiner Verankerung erforderlich ist. Infolgedessen wird der Deckel mit großer Wucht in den Fahrgastraum hineingeschleudert.

Ein weiterer Nachteil dieser vorbekannten Türkonstruktion ist, dass eine übliche Türkonstruktion, die bei der Entfaltung des Airbags auftretenden Kräfte nicht sicher aufnehmen kann. Es besteht daher die Gefahr, dass bei der Auslösung des Airbags die Türkonstruktion zusammenbricht und sich der Airbag nicht vorschriftsmäßig entfalten kann.

Aus der DE 19725122A1 ist eine Schutzvorrichtung gegen einen Seitenaufprall in einem Kraftfahrzeug bekannt. Die Schutzvorrichtung hat ein in einer Verkleidung einer Fahrzeugtür angeordnetes Gaskissen, das sich im aufgeblasenen Zustand über die Türbrüstung erstreckt. Das Gaskissen wird durch wenigstens zwei aufblasbare, sich über die Türbrüstung hinaus erstreckende Stützen an der Fahrzeugtür abgestützt. Im Ruhezustand sind die Stützen zu einer Rolle aufgerollt und innerhalb einer Verkleidung einer Fahrzeugtür untergebracht. Auch bei dieser Vorrichtung ist von Nachteil, dass bei der Auslösung des Gaskissens, das heißt des Airbags, Teile der Verkleidung der Fahrzeugtür abgesprengt werden, was ein Sicherheitsrisiko darstellt.

Aus der DE 10032106A1 ist ein Kopfschutzsystem für Personenkraftwagen ohne seitliche Dachstruktur bekannt. In der Sitzlehne ist ein Airbagmodul angeordnet, dessen Luftsack im entfalteten Zustand den Kopf des Fahrzeuginsassen seitlich abdeckt. Der Luftsack ist an seinem in Fahrtrichtung gesehen hinteren Rand an der Gurtstütze des Sicherheitsgurts befestigt und ein zugfestes Band ist im vorderen Seitenbereich der Sitzfläche des Sitzes und an einem Bereich des Luftsacks befestigt. Das Band hat eine solche Länge, dass es den entfalteten Luftsack in der den Kopf des Insassen abdeckenden Lage hält.

Aus der DE 10063766A1 ist eine Airbagvorrichtung für einen Personenkraftwagen, insbesondere für ein Cabriolet bekannt. Der Airbag ist einem eine Windschutzscheibe einfassenden Dachrahmen untergebracht und entfaltet sich bei seiner Auslösung entgegen der Fahrtrichtung, sodass er sich nach seiner Entfaltung oberhalb des Kopfes des Fahrers und/oder des Beifahrers befindet.

Aus der DE 19843111A1 ist ein Kopfschutz für ein offenes Kraftfahrzeug offenbart. Der Kopfschutz hat einen Luftsack aus einem Material, das sich beim Aufblasen in Längsrichtung verkürzt. Im nicht aufgeblasenen Zustand ist der Luftsack im Bereich der Türbrüstung und einer vorderen nach oben ragenden Strebe angeordnet. Nachteilig ist hierbei insbesondere, dass aus der nach oben ragenden Strebe resultierende Gefahrenmoment.

Aus der DE 19653796A1 ist eine Vorrichtung mit einem Gasgenerator und einem Airbag zum Schutz des Kopfes eines Fahrzeuginsassen bei einem Seitenaufprall bekannt. Der Airbag hat Zwischennähte und eingearbeitete Stäbe, die derart angeordnet sind, dass sich der Luftsack beim Aufblasen um einen für die Zwischennähte und Stäbe gemeinsamen Drehpunkt fächerförmig entfalten kann.

Aus der DE 197 20 588 A1 ist eine Seitenaufprallschutzeinrichtung für einen Insassen eines Fahrzeugs bekannt, die an einem Türinnenblech einer Seitentür befestigt ist.

Aus der DE 42 23 620 A1 ist eine Airbagvorrichtung bekannt, die in einer Fahrzeugtür untergebracht ist.

Die US 2001/042975 A1 offenbart eine Seitenairbaganordnung für ein Kraftfahrzeug mit einem Airbagmodul, welches in eine Tür eines Kraftfahrzeugs integriert ist.

Aus der US 2003/014709 A1 ist eine Seitenairbagvorrichtung bekannt, die einen Airbag zwischen einem Insassen eines Fahrzeugs und einer Seitenwand des Fahrzeugs einbringt, um den Insassen im Falle einer seitlichen Kollision des Fahrzeugs zu schützen. Diese Seitenairbagvorrichtung weist eine untere Airbag-Einheit und eine Steuereinheit auf. Die untere Airbag-Einheit umfasst einen Taillen-Airbag, der in Richtung der Hüfte des Insassen entfaltet und diese entgegen gesetzt zur Richtung der Seitenwand beaufschlagt. Ferner umfasst die Airbag-Einheit einen Gasgenerator zum Aufblasen des Taillen-Airbags und ein Modulgehäuse zur Unterbringung des Taillen-Airbags und des Gasgenerators.

Aus der DE 43 04 152 A1 ist eine andere Schutzvorrichtung für einen Fahrzeuginsassen gegen seitliche Unfälle bekannt. Diese enthält jeweils zumindest einen oberhalb der Oberkante eines Seitenfensters und einen unterhalb der Unterkante desselben angeordneten Airbag. Die Airbags sind so ausgebildet, dass sie bei ihrer Aktivierung sich mit einander zugekehrten Oberflächenbereichen berühren und dort eine bedingt querfeste Verbindung herstellen. Dadurch ergibt sich zumindest während einer ersten Unfallphase eine aufgeblasene Seitenwand.

Aus der DE 43 30 692 A1 ist ein hinter der Innenverkleidung der Seitenstruktur eines Kraftfahrzeugs angeordneter zusammengefalteter Airbag einer Aufprall-Schutzeinheit gegen Seitenaufprall bekannt. Der Airbag liegt im aktivierten Zustand zwischen dem Thorax des Fahrzeuginsassen und der Seitenstruktur des Kraftfahrzeugs, Die Austrittsöffnung für den Airbag ist mit einer optisch und stylistisch der Innenseite der Innenverkleidung angepassten Abdeckung verschlossen. Diese ist mit dem Airbag verbundenen und an ihrem Umfang mit dem Rand der Austrittsöffnung verklemmt.

Ein gemeinsamer Nachteil vorbekannter Seitenaufprallschutzvorrichtungen ist, dass beim Aufreißen der Airbagklappe hohe Öffnungskräfte auftreten und dadurch hohe Reaktionskräfte auf die Türverkleidung einwirken.

Demgegenüber liegt der Erfindung die Aufgabe zugrunde, eine verbesserte Türinnenverkleidung zum Kopf- und/oder Schulteraufprallschutz bei einer Seitenkollision und/oder einem Überschlag zu schaffen sowie eine verbesserte Kraftfahrzeugtür zum Kopf- und/oder Schulteraufprallschutz bei einer Seitenkollision und/oder einem Überschlag.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Die erfindungsgemäße Türinnenverkleidung hat einen Airbag und einen Schusskanal für den Airbag. Der Schusskanal hat eine Austrittsöffnung zum Austritt des Airbags in Richtung eines Kopfbereichs und/oder eines Schulterbereichs. Im Ruhezustand wird die Austrittsöffnung des Schusskanals durch eine Airbagklappe abgedeckt. Außerdem ist die Airbagklappe so ausgebildet, dass sie bei der Auslösung des Airbags in Richtung auf die Fensterscheibe aufschwenkt. Schließlich hat eine Aufreißlinie einen V-förmig verlaufenden Abschnitt. Durch den V-förmigen Abschnitt kann während des Druckaufbaus bei der Entfaltung des Airbags eine Spannungsspitze an der Spitze der V-förmigen Aufreißlinie erzielt werden.

Die erfindungsgemäße Türinnenverkleidung erlaubt vorteilhaft, die Öffnungskräfte und damit auch die Reaktionskräfte auf die Türverkleidung zu reduzieren. Durch den V-förmigen Abschnitt kommt es zu einem Initialriss, der sich leicht entlang der Aufreißlinie weiter ausbreitet. Die erfindungsgemäße Türinnenverkleidung erlaubt ferner vorteilhaft, dass auch Dekormaterialien, die relativ schlecht reißen, zum Einsatz kommen können, was die Freiheit bei der Innenraumgestaltung erhöht.

Dabei wahrt die erfindungsgemäße Türinnenverkleidung die bekannten Vorteile, da die Türinnenverkleidung als integralen Bestandteil eine Airbag-Vorrichtung beinhaltet, bestehend aus dem Airbag, einem Schusskanal für den Airbag und einer Airbagklappe zur Abdeckung einer in der Türinnenverkleidung gebildeten Austrittsöffnung für den Airbag. Die Türinnenverkleidung mit der Airbag-Vorrichtung kann also fertig montiert als Modul an das Montageband einer Kraftfahrzeugfertigung geliefert werden. Dadurch lässt sich der Montageaufwand erheblich reduzieren. Beispielsweise hat die Türinnenverkleidung einen Falz, mit der sie in eine Einhängeleiste der Kraftfahrzeugtür eingehängt werden kann. Die Türinnenverkleidung wird dann heruntergeschwenkt und beispielsweise durch eine Rastverbindung an der Kraftfahrzeugtür befestigt.

Vorzugsweise ist auch ein Gasgenerator an der Türinnenverkleidung befestigt, wenn diese zu dem Montageband geliefert wird. Bei der Montage der Türinnenverkleidung an der Kraftfahrzeugtür kann es erforderlich sein, den Gasgenerator durch eine zusätzliche Schraubverbindung oder eine andere geeignete Verbindung zum Beispiel an dem Türinnenträger, wie zum Beispiel einem Türinnenblech zu befestigen.

Im Gegensatz zum Stand der Technik, wie er etwa aus der DE 19632616A1 bekannt ist, kann bei einer Ausführungsform der erfindungsgemäßen Vorrichtung zum Seitenaufprallschutz die Airbagklappe nicht unkontrolliert in den Fahrgastraum hineingeschleudert werden, wenn der Airbag auslöst. Im Gegenteil wird nach der Auslösung des Airbags aufgrund der Entfaltungskräfte des Airbags die Aufreißlinie aufgetrennt, sodass die Airbagklappe kontrolliert aufschwenken oder durch ein Fangband zurückgehalten werden kann.

Nach einer bevorzugten Ausführungsform der Erfindung ist der Schusskanal so ausgebildet, dass die Entfaltungskraft des Airbags auf die Aufreisslinie ausgerichtet wird. Durch geeignete Gestaltung des Schusskanals wird also der sich entfaltende Airbag auf die Aufreißlinie gerichtet. Durch entsprechende Konzentration der Entfaltungskraft des Airbags im Bereich der Aufreißlinie ist eine insgesamt geringere Entfaltungskraft für das Aufreißen entlang der Aufreißlinie erforderlich. Dies ist in mehrfacher Hinsicht vorteilhaft.

Zum einen kann die Airbag-Vorrichtung mit einem kleineren Gasgenerator realisiert werden, da eine insgesamt geringere Entfaltungskraft erforderlich ist. Zum anderen kann die Airbag-Vorrichtung weniger stark dimensioniert sein, insbesondere was den Schusskanal und die Airbagklappe betrifft, und zwar wiederum aufgrund der geringeren Gesamtentfaltungskraft. Damit geht eine weitere Verringerung des Verletzungsrisikos aufgrund der aufschwenkenden Airbagklappe einher, da die Wucht, mit der die Airbagklappe aufschwenkt ebenfalls reduziert wird. Ein weiterer Vorteil ist, dass sich die Airbag-Vorrichtung in die Türverkleidung integrieren lässt, da insgesamt weniger starke Kräfte bei der Entfaltung des Airbags wirksam werden.

Nach einer weiteren bevorzugten Ausführungsform der Erfindung sind in dem Schusskanal ein oder mehrere Prallelemente angeordnet. Das oder die Prallelemente dienen dabei zur Ausrichtung des sich entfaltenden Airbags in Richtung auf die Aufreißlinie. Vorzugsweise ist zumindest eines der Prallelemente keilförmig ausgebildet.

Nach einer weiteren bevorzugten Ausführungsform der Erfindung ist ein Prallelement im Bereich der Aufreißlinie angeordnet. Über das Prallelement wird unmittelbar eine Kraft auf die Aufreißlinie gerichtet, wenn sich der Airbag entfaltet und auf das Prallelement trifft.

Nach einer bevorzugten Ausführungsform der Erfindung ist in dem Schusskanal ein winkelförmiges Verstärkungsteil angeordnet. Vorzugsweise verbindet das winkelförmige Verstärkungsteil eine untere Begrenzung des Schusskanals mit einer Wandung der Türinnenverkleidung.

Nach einer weiteren bevorzugten Ausführungsform der Erfindung hat der Schusskanal eine seitliche Begrenzung, die im Wesentlichen in vertikale Richtung verläuft und an oder in der Türinnenverkleidung befestigt ist.

Nach einer weiteren bevorzugten Ausführungsform der Erfindung ist die Airbagklappe an der Türbrüstung angeordnet. Beispielsweise ist die Airbagklappe in dem Träger der Türinnenverkleidung integriert.

Nach einer weiteren bevorzugten Ausführungsform der Erfindung hat die Vorrichtung zwei Airbagklappen, die gegenläufig aufschwenken können, wenn der Airbag ausgelöst wird. Die eine Airbagklappe schwenkt also in Richtung auf die Fensterscheibe, während die andere Airbagklappe in den Fahrgastraum hinein aufschwenkt. Durch die zwei Airbagklappen wird bei der Entfaltung des Airbags frühzeitig ein großes Entfaltungsvolumen geschaffen, sodass der für die Entfaltung des Airbags erforderliche Entfaltungsdruck entsprechend reduziert werden kann. Obwohl also eine der

Airbagklappen in den Fahrgastraum hinein aufschwenkt, ist diese Ausführungsform insgesamt zur Reduzierung des Verletzungsrisikos bei der Auslösung des Airbags vorteilhaft.

Nach einer weiteren bevorzugten Ausführungsform der Erfindung ist die Airbagklappe mit einem Fangband verbunden. Das Fangband bietet eine zusätzliche Sicherheit gegen ein unkontrolliertes Herausschleudern der Airbagklappe in den Fahrgastraum.

Nach einer weiteren bevorzugten Ausführungsform der Erfindung ist die Kraftfahrzeugtür mit der erfindungsgemäßen Vorrichtung als sogenannte Hybridtür ausgebildet. Hybridtüren und deren Herstellung sind an sich aus dem Stand der Technik bekannt (vgl. https://plastics.bayer.de/AG/DE/technology/1013/59/index.jsp und http://dbindustrie.svhfi.securitas.net/AI/resources/2b53f848ad7.pdf). Die Erstellung eines Verbundkörpers aus Kunststoff- und Metallteilen mit einem durch Spritzgießen oder Extrusion erzeugten Formschluss zwischen den beiden Komponenten erlaubt die Herstellung von hoch belastbaren aber auch kostengünstigen Bauteilen.

Im Weiteren werden bevorzugte Ausführungsformen der Erfindung mit Bezugnahme auf die Zeichnungen näher erläutert. Es zeigen
- Figur 1: eine Schnittansicht einer ersten Ausführungsform einer erfindungsgemäßen Vorrichtung,
- Figur 2: eine Schnittansicht einer zweiten Ausführungsform einer erfindungsgemäßen Vorrichtung,
- Figur 3: eine perspektivische Ansicht einer Ausführungsform einer erfindungsgemäßen Türverkleidung,
- Figur 4: zeigt eine schematische Draufsicht eines Kraftfahrzeuginnenraums.

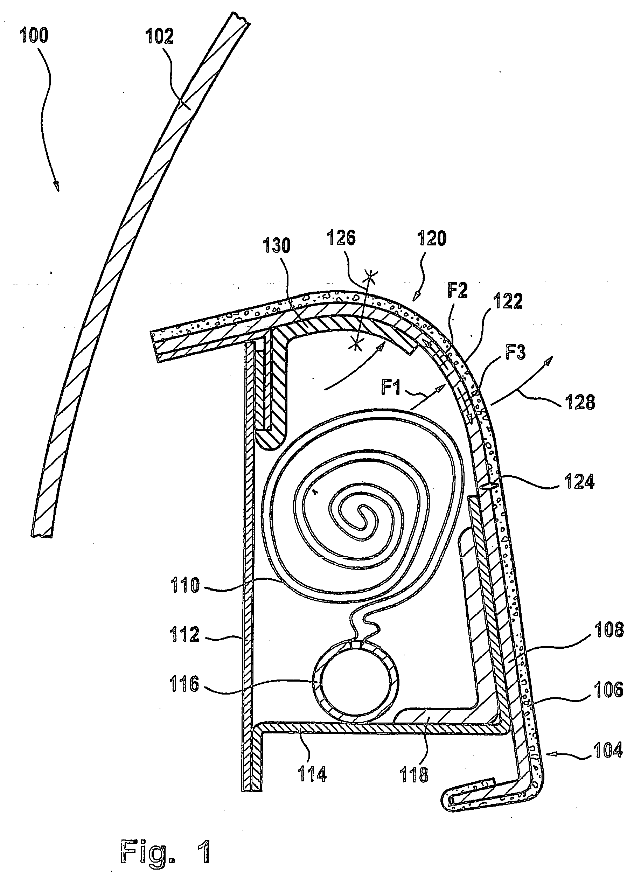

Die Figur 1 zeigt den oberen Bereich einer seitlichen Kraftfahrzeugtür 100, beispielsweise der Fahrertür. Die Kraftfahrzeugtür 100 hat eine Fensterscheibe 102 und eine Türinnenverkleidung 104. Die Türinnenverkleidung 104 hat eine äußere Dekorschicht 106, wobei es sich beispielsweise um eine PVC-Folie handelt. Die Dekorschicht 106 ist auf einem Träger 108 der Türinnenverkleidung 104 aufgebracht.

Innerhalb der Türinnenverkleidung 104 befindet sich ein Schusskanal für einen Airbag 110. Der Schusskanal hat eine im Wesentlichen in vertikaler Richtung verlaufende Begrenzung 112 und eine im Wesentlichen in horizontaler Richtung verlaufende Begrenzung 114. Durch die Begrenzungen 112, 114 und die Kontur des Trägers 108 wird in dem Schusskanal ein Aufnahmeraum für den Airbag 110 gebildet. Der Airbag 110 ist in der Figur 1 in Ruheposition gezeigt.

Neben den Begrenzungen 112 und 112 sind seitliche Begrenzungen des hierduch gebildeten Schußkanals nicht unbedingt erforderlich, insbesondere dann nicht, wenn sich der Airbag 110 im wesentlichen in Pfeilrichtung 128 ausdehnt. Dies kann z.B. durch eine entsprechende Nähung des Airbags 110 erreicht werden.

Der Airbag 110 ist mit einer Lanze 116 verbunden. Die Lanze 116 ist mit einem in der Figur 1 nicht gezeigten Generator verbunden, der ebenfalls an der Tür befestigt ist. Bei Auslösung des Airbags strömt von dem Generator über die Lanze 116 Gas in den Airbag 110, um diesen zu entfalten.

Zur Aufnahme der bei der Entfaltung des Airbags 110 wirkenden Kräfte ist an der Begrenzung 114 ein winkelförmiges Verstärkungsteil 118 angeordnet.

Im Bereich der Türbrüstung 120 der Türinnenverkleidung 104 ist eine Airbagklappe 122 angeordnet. Vorzugsweise ist die Airbagklappe 122 integraler Bestandteil des Trägers 108. Die Airbagklappe 122 ist durch eine Aufreißlinie 124 begrenzt, die in dem Träger 108 und/oder der Dekorschicht 106 verläuft. Bei der Aufreißlinie 124 kann es sich beispielsweise um eine Schwächungslinie, insbesondere eine Schwächungsrille handeln, die mechanisch, mit einem Ultraschallmesser oder mittels Laserstrahl in die Dekorschicht 106 und/oder den Träger 108 geschnitten worden ist.

Am oberen Ende der Airbagklappe 122 befindet sich ein Scharnier 126, sodass die Airbagklappe 122 bei Auslösung des Airbags 110 in Pfeilrichtung 128 aufschwenken kann. Das Scharnier 126 kann durch eine Gummischicht 130 oder eine Schicht aus EPDM gebildet oder hierdurch verstärkt werden. In dem hier betrachteten Ausführungsbeispiel ist die Gummischicht 130 im Bereich der Türbrüstung 120 unterhalb des Trägers 108 der Türinnenverkleidung 104 angeordnet.

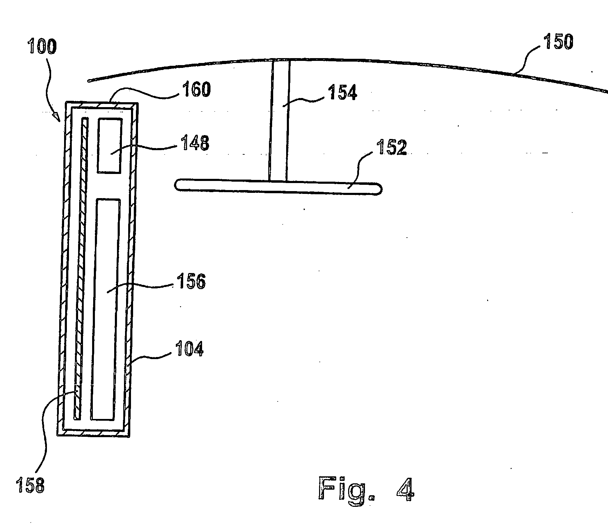

Die Begrenzungen 112 und 114 können aus Kunststoff oder Metall bestehen und sind fest mit dem Träger 108 verbunden, so dass der Airbag 110 mit der Lanze 116 und dem durch die Begrenzungen 112 und 114 gebildeten Schusskanal einen integralen Bestandteil der Türinnenverkleidung 104 bildet. Zusätzlich kann auch der Gasgenerator für den Airbag 110 an der Türinnenverkleidung 104 befestigt sein, wie dies in der Figur 4 dargestellt ist.

Die Türinnenverkleidung 104 mit ihrer Airbagvorrichtung, die einen integralen Bestandteil der Türinnenverkleidung 104 bildet, kann also als fertig montiertes Modul an ein Montageband geliefert werden, um an einer Kraftfahrzeugtür montiert zu werden. Zur Endmontage des Gasgenerators kann es erforderlich sein, diesen zum Beispiel mittels einer Schraubverbindung an einem Türinnenträger, wie zum Beispiel einem Türinnenblech, zusätzlichen Halt zu geben.

Bei Auslösung des Airbags 110 entfaltet sich dieser innerhalb des durch die Begrenzungen 112, 114 und den Träger 108 gebildeten Schusskanals und trifft auf die Airbagklappe 122. Aufgrund der dabei auf die Airbagklappe 122 wirkenden Kräfte, d.h. der Kraft F1 und deren Komponenten F2 und F3, wird die Aufreißlinie 124 aufgetrennt, und die Airbagklappe 122 schwenkt in Pfeilrichtung 128 um das Scharnier 126 in Richtung auf die Innenseite der Fensterscheibe 102. Dadurch wird die Austrittsöffnung des Schusskanals freigegeben, sodass sich der Airbag 110 in einen Kopfbereich des Fahrgastraums hinein entfalten kann. Dadurch werden der Kopf und/oder die Schulter des Fahrers bzw. eines Fahrgasts geschützt. Die Begrenzungen 112 und 114 wirken als Widerlager zur Aufnahme der Kraft F1 bzw. deren Komponenten.

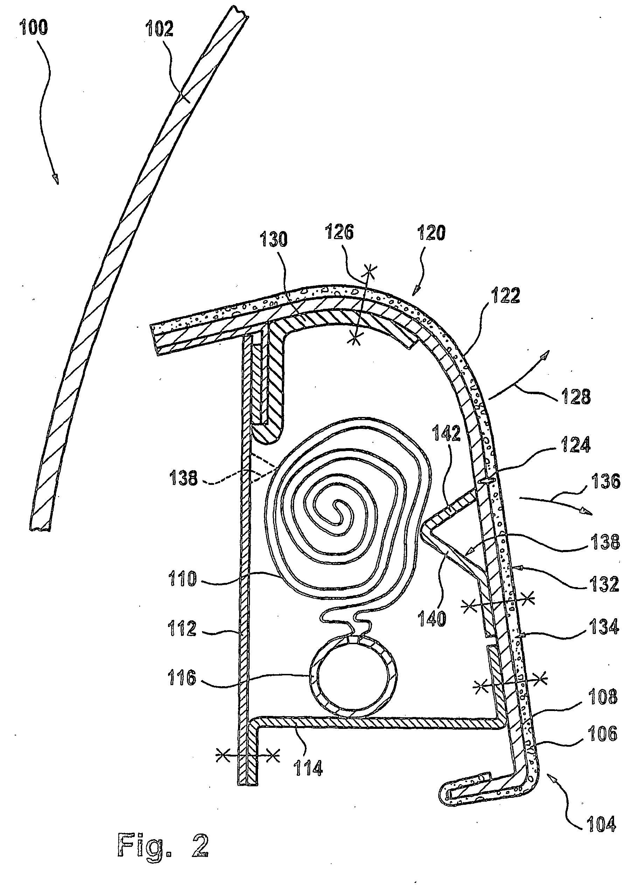

Die Figur 2 zeigt eine alternative Ausführungsform der Kraftfahrzeugtür 100. Elemente der Figur 2, die Elementen der Figur 1 entsprechen, sind mit denselben Bezugszeichen gekennzeichnet.

Bei der Ausführungsform der Figur 2 hat die Kraftfahrzeugtür 100 eine weitere Airbagklappe 132. Die Airbagklappe 132 wird einerseits durch die Aufreißlinie 124 begrenzt und andererseits durch ein weiteres Gelenk oder Scharnier 134. Vorzugsweise ist die Airbagklappe 132 wie die Airbagklappe 122 integraler Bestandteil des Trägers 108 der Türinnenverkleidung 104. Aufgrund der Anordnung des Scharniers 134 unterhalb der Aufreißlinie 124 schwenkt die Airbagklappe 132 in Pfeilrichtung 136, welche zu der Pfeilrichtung 128 gegenläufig ist, auf, wenn der Airbag 110 ausgelöst wird. Im Gegensatz zu der Airbagklappe 122 schwenkt also die Airbagklappe 132 nicht in Richtung auf die Fensterscheibe 102, sondern in den Fahrgastraum hinein.

An der Unterseite der Airbagklappe 132 ist ein Prallelement 138 angeordnet. In dem hier betrachteten Ausführungsbeispiel ist das Prallelement 138 keilförmig. Das Prallelement 138 hat einen ersten Schenkel 140, welcher eine Prallfläche für den sich entfaltenden Airbag 110 bildet. Ein weiterer Schenkel 142 des Prallelements 138 steht auf der Aufreißlinie 124.

Bei Auslösung des Airbags 110 prallt dieser auf den Schenkel 140. Die hierbei auf den Schenkel 140 ausgeübte Kraft wird über den Schenkel 142 zumindest teilweise auf die Aufreißlinie 124 übertragen, sodass diese aufreißt bzw. hierdurch der Aufreißvorgang unterstützt wird.

Alternativ können ein oder mehrere weitere Prallelemente 138 zum Beispiel an der Begrenzung 112 angeordnet sein, wie in der Fig. 2 mit gestrichelten Linien gezeigt, um den sich entfaltenden Airbag 110 auf die Aufreißlinie 124 zu richten. Durch das oder die weiteren Prallelemente 138 wird der sich entfaltende Airbag in Richtung auf die Aufreißlinie gelenkt. Durch die daraus resultierende Konzentration der Entfaltungskraft des Airbags 110 auf die Aufreißlinie 124 kann mit einem relativ geringen Entfaltungsdruck gearbeitet werden, was gleichermaßen für die Reduzierung des Verletzungsrisikos als auch für die Dimensionierung der Vorrichtung, insbesondere des Trägers 108 sowie der Begrenzungen 112, 114 vorteilhaft ist.

Ein relativ geringer Entfaltungsdruck wird auch dadurch ermöglicht, dass aufgrund der beiden Airbagklappen 122 und 132 eine relativ große Austrittsöffnung geschaffen wird, durch die hindurch sich der Airbag leicht entfalten kann.

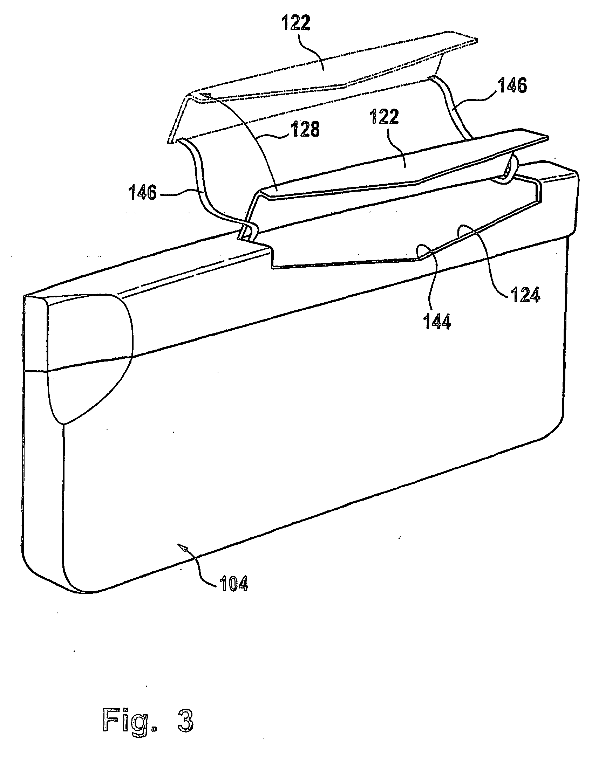

Die Figur 3 zeigt eine perspektivische Ansicht einer Ausführungsform einer erfindungsgemäßen Türinnenverkleidung 104. Elemente der Figur 3, die Elementen der Figuren 1 und 2 entsprechen, werden wiederum mit denselben Bezugszeichen gekennzeichnet.

In der Ausführungsform der Figur 3 hat die Aufreißlinie 124 einen V-förmigen Verlauf. Bei der Entfaltung des Airbags 110 kommt es dadurch während des Druckaufbaus zu einer Spannungsspitze an der Spitze 144 des V-förmigen Verlaufs der Aufreißlinie 124. Dadurch kommt es zu einem Initialriss, der sich leicht entlang der Aufreißlinie weiterreißt. Auch aufgrund dieser Maßnahme kann entsprechend der Entfaltungsdruck des Airbags 110 reduziert werden.

Die Figur 3 zeigt die Airbagklappe 122 in geöffneter Position, das heißt bei freigegebener Austrittsöffnung des Schusskanals.

Als Ausführungsvariante zeigt die Figur 3 ferner, dass die Airbagklappe 122 anstatt mit dem Scharnier 126 auch über Fangbänder 146 gehalten werden kann. Die Fangbänder 146 sind an geeigneter Stelle im Inneren der Türinnenverkleidung 104 befestigt. Bei der Entfaltung des Airbags 110 (vgl. Figuren 1 und 2) sorgen die Fangbänder 146 dafür, dass die Airbagklappe 122 nicht unkontrolliert in den Fahrgastraum hineingeschleudert wird.

Die Figur 4 zeigt eine schematische Draufsicht auf den Innenraum eines Kraftfahrzeugs. Der Innenraum wird unter anderem durch die Türinnenverkleidung 104 der Kraftfahrzeugtür 100 und eine Instrumententafel 150 begrenzt. Ein Lenkrad 152 des Kraftfahrzeugs ist an einer Lenksäule 154 des Kraftfahrzeugs angeordnet.

Hinter der Außenseite der Türinnenverkleidung 104 ist deren Airbagvorrichtung 156 angeordnet, die einen in Längsrichtung ausgedehnten Airbag, einen Schusskanal und eine Airbagklappe sowie weitere Elemente, wie zum Beispiel Prallelemente oder Verstärkungselemente aufweist (vgl. beispielsweise der Airbag 110, die Begrenzungen 112, 114 und die Airbagklappe 122 sowie das Prallelement 138 der Figuren 1, 2 und 3).

Innerhalb der Tür 100 kann ein Träger 158 zur Aufnahme verschiedener Türaggregate, wie zum Beispiel des Fensterhebers und dergleichen angeordnet sein. Bei dem Träger kann es sich z.B. um ein Türinnenblech handeln. Um dem an der Türinnenverkleidung 104 befestigten Gasgenerator 148 zusätzlichen Halt zu verschaffen, kann dieser zum Beispiel mittels einer Schraubverbindung an dem Träger 158 befestigt sein.

Der Gasgenerator 148 ist in der hier betrachteten Ausführungsform an einer Seite 160 der Tür angeordnet, die der Instrumententafel 150 gegenüberliegt. Der Gasgenerator 148 befindet sich also in etwa im Bereich der Lenksäule und / oder des Lenkrads 152. Das Lenkrad 152 hat vorzugsweise einen Lenkrad-Airbag, so dass eine Entfaltung des Airbags der Airbag-Vorrichtung 156 in diesem Bereich nicht erforderlich ist.

Vorzugsweise kommt die erfindungsgemäße Vorrichtung bei Cabriolets zum Einsatz, die keine Dachstruktur für die üblichen Curtain-Airbags aufweisen. Die vorliegende Erfindung ermöglicht die Integration eines Airbags für den Seitenaufprallschutz, insbesondere den Kopf-Seitenaufprallschutz, in die Türverkleidung eines solchen Fahrzeugs, und zwar in konstruktiv vorteilhafter Weise.

Bei der Herstellung der erfindungsgemäßen Vorrichtung kann das Airbagmodul sowohl vormontiert in die Türbrüstung an das Montageband geliefert werden als auch vor Montage der Türverkleidung zunächst an das Türinnenblech montiert werden.

### Bezugszeichenliste

- 100: Kraftfahrzeugtür
- 102: Fensterscheibe
- 104: Türverkleidung
- 106: Dekorschicht
- 108: Träger
- 110: Airbag
- 112: Begrenzung
- 114: Begrenzung
- 116: Lanze
- 118: Verstärkungsteil
- 120: Türbrüstung
- 122: Airbagklappe
- 124: Aufreißlinie
- 126: Scharnier
- 128: Pfeilrichtung
- 130: Gummischicht
- 132: Airbagklappe
- 134: Scharnier
- 136: Pfeilrichtung
- 138: Prallelement
- 140: Schenkel
- 142: Schenkel
- 144: Spitze
- 146: Fangkanal
- 148: Gasgenerator
- 150: Instrumententafel
- 152: Lenkrad
- 154: Lenksäule
- 156: Airbag-Vorrichtung
- 158: Träger
- 160: Seite

## Patentansprüche

1. Türinnenverkleidung mit einem Airbag (110) zum Kopf- und/oder Schulteraufprallschutz bei einer Seitenkollision und/oder einem Überschlag, einem Schusskanal (112, 114, 108) für den Airbag, wobei der Schusskanal eine Austrittsöffnung zum Austritt des Airbags in Richtung eines Kopf- und/oder Schulterbereichs aufweist, und mit zumindest einer Airbagklappe (122, 132) zur Abdeckung der Austrittsöffnung, wobei die Airbagklappe zum Aufschwenken vom Fahrgastraum weg in Richtung eines Seitenfensters (102) ausgebildet ist, **dadurch gekennzeichnet, dass** eine Aufreißlinie (124) für die Öffnung der Airbagklappe einen im Wesentlichen V-förmigen Abschnitt aufweist.

2. Türinnenverkleidung nach Anspruch 1, mit einer Aufreißlinie (124), wobei der Schusskanal so ausgebildet ist, dass eine Entfaltungskraft des Airbags auf die Aufreißlinie gerichtet wird.

3. Türinnenverkleidung nach Anspruch 1 oder 2, mit einem Prallelement (138, 140, 142) in dem Schusskanal zur Einleitung eines Teils der Entfaltungskraft des Airbags auf die Aufreißlinie oder zur Lenkung des sich entfaltenden Airbag in Richtung auf die Aufreißlinie.

4. Türinnenverkleidung nach Anspruch 3, wobei das Prallelement keilförmig ausgebildet ist.

5. Türinnenverkleidung nach Anspruch 3 oder 4, wobei das Prallelement einen Schenkel (142) aufweist, der im Bereich der Aufreißlinie aufsteht.

6. Türinnenverkleidung nach einem der vorhergehenden Ansprüche, mit einem winkelförmigen Verstärkungsteil (118) für den Schusskanal.

7. Türinnenverkleidung nach einem der vorhergehenden Ansprüche, wobei der Schusskanal eine seitliche Begrenzung (112) aufweist, die im Wesentlichen in vertikaler Richtung verläuft.

8. Türinnenverkleidung nach einem der vorhergehenden Ansprüche, mit einem Gasgenerator (148) für den Airbag.

9. Türinnenverkleidung nach Anspruch 8, wobei der Gasgenerator an einer in Einbauposition einer Instrumentafel (150) gegenüberliegenden Seite (160) angeordnet ist.

10. Türinnenverkleidung nach einem der vorhergehenden Ansprüche, wobei die Airbagklappe in einer Brüstung (120) angeordnet ist.

11. Türinnenverkleidung nach einem der vorhergehenden Ansprüche, wobei die Airbagklappe in einem Träger (108) der Türverkleidung (104) ausgebildet ist.

12. Türinnenverkleidung nach einem der vorhergehenden Ansprüche mit einer weiteren Airbagklappe (132) zur Abdeckung der Austrittsöffnung, wobei die weitere Airbagklappe zum gegenläufigen (136) Aufschwenken ausgebildet ist.

13. Türinnenverkleidung nach einem der vorhergehenden Ansprüche, mit einem Fangband (146) für die Airbagklappe.

14. Türinnenverkleidung nach einem der vorhergehenden Ansprüche, mit Begrenzungen (112, 114) für den Schusskanal und einem Träger (108), wobei die Begrenzungen an dem Träger befestigt sind, und wobei durch die Begrenzungen und den Träger unterhalb einer Brüstung (120) der Türinnenverkleidung ein Aufnahmeraum für den Airbag in zusammengefalteten Zustand gebildet wird.

15. Türinnenverkleidung nach Anspruch 14, wobei in dem Aufnahmeraum eine Lanze (116) zum Anschluß des Airbags an einen Gasgenerator (148) angeordnet ist.

16. Kraftfahrzeugtür mit einer Türinnenverkleidung (104), wobei die Türinnenverkleidung einen Airbag zum Kopf- und/oder Schulteraufprallschutz bei einer Seitenkollision und/oder einem Überschlag aufweist, mit einem Schusskanal (112, 114, 108) für den Airbag, wobei der Schusskanal eine Austrittsöffnung zum Austritt des Airbags in Richtung eines Kopf und/oder Schulterbereichs aufweist, und mit zumindest einer Airbagklappe (122, 132) zur Abdeckung der Austrittsöffnung, wobei die Airbagklappe zum Aufschwenken vom Fahrgastraum weg in Richtung eines Seitenfensters (102) ausgebildet ist, **dadurch gekennzeichnet, dass** eine Aufreißlinie (124) für die Öffnung der Airbagklappe einen im Wesentlichen V-förmigen Abschnitt aufweist.

17. Kraftfahrzeugtür nach Anspruch 16, welche als Hybridtür ausgebildet ist.

18. Kraftfahrzeugtür nach Anspruch 16 oder 17 für ein Cabriolet.

## Claims

1. An internal door cladding comprising an airbag (110) for protecting the head and/or shoulders against impact in the event of a side collision and/or rollover, comprising a firing channel (112, 114, 108) for the airbag, wherein the firing channel has an exit opening for the emergence of the airbag in the direction of a head and/or shoulder area, and comprising at least one airbag flap (122, 132) for covering the exit opening, wherein the airbag flap is configured to swing open away from the passenger compartment in the direction of a side window (102), **characterised in that** a tear line (124) for the opening of the airbag flap has a substantially V-shaped portion.

2. The internal door cladding according to Claim 1, comprising a tear line (124), wherein the firing channel is configured such that a deployment force of the airbag is directed to the tear line.

3. The internal door cladding according to Claim 1 or 2, comprising an impact element (138, 140, 142) in the firing channel for directing some of the deployment force of the airbag onto the tear line or for steering the deploying airbag in the direction of the tear line.

4. The internal door cladding according to Claim 3, wherein the impact element is wedge-shaped.

5. The internal door cladding according to Claim 3 or 4, wherein the impact element has a leg (142) that protrudes in the region of the tear line.

6. The internal door cladding according to one of the preceding claims, comprising an angular reinforcement part (118) for the firing channel.

7. The internal door cladding according to one of the preceding claims, wherein the firing channel has a lateral delimitation (112) that runs substantially in the vertical direction.

8. The internal door cladding according to one of the preceding claims, comprising a gas generator (148) for the airbag.

9. The internal door cladding according to Claim 8, wherein the gas generator is arranged on a side (160) that is opposite an instrument panel (150) in a fitted position.

10. The internal door cladding according to one of the preceding claims, wherein the airbag flap is arranged in a sill (120).

11. The internal door cladding according to one of the preceding claims, wherein the airbag flap is formed in a support (108) of the door cladding (104).

12. The internal door cladding according to one of the preceding claims, comprising a further airbag flap (132) for covering the exit opening, wherein the further airbag flap is configured to swing open in the opposite direction (136).

13. The internal door cladding according to one of the preceding claims, comprising a catch strap (146) for the airbag flap.

14. The internal door cladding according to one of the preceding claims, comprising delimitations (112, 114) for the firing channel, and a support (108), wherein the delimitations are secured to the support, and wherein a receiving space for the airbag in the collapsed state is formed below a sill (120) of the internal door cladding by the delimitations and the support.

15. The internal door cladding according to Claim 14, wherein a lance (116) for connecting the airbag to a gas generator (148) is arranged in the receiving space.

16. A motor vehicle door comprising an internal door cladding (104), wherein the internal door cladding has an airbag for protecting the head and/or shoulders against impact in the event of a side collision and/or rollover, comprising a firing channel (112, 114, 108) for the airbag, wherein the firing channel has an exit opening for the emergence of the airbag in the direction of a head and/or shoulder area, and comprising at least one airbag flap (122, 132) for covering the exit opening, wherein the airbag flap is configured to swing open away from the passenger compartment in the direction of a side window (102), **characterised in that** a tear line (124) for the opening of the airbag flap has a substantially V-shaped portion.

17. The motor vehicle door according to Claim 16, which door is formed as a hybrid door.

18. The motor vehicle door according to Claim 16 or 17 for a cabriolet.

## Revendications

1. Habillage intérieur de porte avec un airbag (110) pour la protection contre les chocs sur la tête et/ou les épaules lors d'une collision latérale et/ou d'un tonneau, un canal d'éjection (112, 114, 108) pour l'airbag, le canal d'éjection comportant une ouverture de sortie pour la sortie de l'airbag dans la direction d'une région de tête et/ou d'épaule, et avec au moins un clapet d'airbag (122, 132) destiné à recouvrir l'ouverture de sortie, dans lequel le clapet d'airbag est conçu pour pivoter à distance de l'espace passagers, en direction d'une fenêtre latérale (102), **caractérisé en ce qu'**une ligne de déchirure (124) pour l'ouverture du clapet d'airbag présente une section essentiellement en forme de V.

2. Habillage intérieur de porte selon la revendication 1, avec une ligne de déchirure (124), dans lequel le canal d'éjection est conçu de manière à ce que la force de déploiement de l'airbag soit orientée vers la ligne de déchirure.

3. Habillage intérieur de porte selon la revendication 1 ou 2, avec un élément d'impact (138, 140, 142) dans le canal d'éjection pour l'introduction d'une partie de la force de déploiement de l'airbag sur la ligne de déchirure ou pour l'orientation de l'airbag en cours de déploiement vers la ligne de déchirure.

4. Habillage intérieur de porte selon la revendication 3, dans lequel l'élément d'impact est conçu en forme de cône.

5. Habillage intérieur de porte selon la revendication 3 ou 4, dans lequel l'élément d'impact comporte une branche (142) faisant saillie dans la région de la ligne de déchirure.

6. Habillage intérieur de porte selon l'une des revendications précédentes, avec une partie de renfort angulaire (118) pour le canal d'éjection.

7. Habillage intérieur de porte selon l'une des revendications précédentes, dans lequel le canal d'éjection comporte une délimitation latérale (1112) s'étendant essentiellement dans la direction verticale.

8. Habillage intérieur de porte selon l'une des revendications précédentes, avec un générateur de gaz (148) pour l'airbag.

9. Habillage intérieur de porte selon la revendication 8, dans lequel le générateur de gaz est agencé sur un côté (160) opposé à un tableau de bord (150) dans une position de montage.

10. Habillage intérieur de porte selon l'une des revendications précédentes, dans lequel le clapet d'airbag est agencé dans un appui (120).

11. Habillage intérieur de porte selon l'une des revendications précédentes, dans lequel le clapet d'airbag est formé sur un support (108) de l'habillage de porte (104).

12. Habillage intérieur de porte selon l'une des revendications précédentes, avec un clapet d'airbag (132) supplémentaire pour couvrir l'ouverture de sortie, dans lequel le clapet d'airbag supplémentaire est conçu pour être relevé par un pivotement (136) en sens inverse.

13. Habillage intérieur de porte selon l'une des revendications précédentes, avec une bande de garde (146) pour le clapet d'airbag.

14. Habillage intérieur de porte selon l'une des revendications précédentes, avec des délimitations (112, 114) pour le canal d'éjection et un support (108), dans lequel les délimitations sont fixées sur le support, et dans lequel un espace de réception pour l'airbag dans un état plié est formé par les délimitations et le support, en dessous d'un appui (120) de l'habillage intérieur de porte.

15. Habillage intérieur de porte selon la revendication 14, dans lequel une lance (116) est agencée dans l'espace de réception pour raccorder l'airbag à un générateur de gaz (148).

16. Porte de véhicule automobile avec un habillage intérieur de porte (104), dans laquelle l'habillage intérieur de porte comporte un airbag pour la protection contre les chocs sur la tête et/ou les épaules lors d'une collision latérale et/ou d'un tonneau, avec un canal d'éjection (112, 114, 108) pour l'airbag, le canal d'éjection comportant une ouverture de sortie pour la sortie de l'airbag dans la direction d'une région de tête et/ou d'épaule, et avec au moins un clapet d'airbag (122, 132) destiné à recouvrir l'ouverture de sortie, dans lequel le clapet d'airbag est conçu pour pivoter à distance de l'espace passagers, en direction d'une fenêtre latérale (102), **caractérisée en ce qu'**une ligne de déchirure (124) pour l'ouverture du clapet d'airbag présente une section essentiellement en forme de V.

17. Porte de véhicule automobile selon la revendication 16, laquelle est conçue comme une porte hybride.

18. Porte de véhicule automobile selon la revendication 16 ou 17 pour un cabriolet.
